# EUROPÄISCHE PATENTANMELDUNG

(11) **EP 4 744 858 A1**
(43) Veröffentlichungstag der Anmeldung: **20.05.2026**
(21) Anmeldenummer: 25207995.9
(22) Anmeldetag: 10.10.2025
(51) Int. Cl.: B29C 45/14, B29C 37/00, B29C 70/72, H01R 13/41, H01R 43/20

(54) **STIFTKONTAKTEINSETZMASCHINE UND VERFAHREN ZUM SETZEN VON STIFTKONTAKTEN IN EIN KUNSTSTOFFBAUTEIL**

(30) Priorität: 11.10.2024 DE 102024129534
(71) Anmelder: HAHN Automation Group Diepenau GmbH, 31603 Diepenau Niedersachsen (DE)
(72) Erfinder: Heuer, Ingo, 31603 Diepenau (DE)
(74) Vertreter: Janke Scholl Patentanwälte PartG mbB

(57) **Zusammenfassung**

Stiftkontakteinsetzmaschine, mit einer Fördereinheit (4) zum Fördern eines Stiftkontaktstreifens (6), wobei der Stiftkontaktstreifen (6) eine Mehrzahl miteinander verbundener, parallel zueinander aufgereihter Stiftkontakte (8) aufweist, mit einer Trenneinrichtung (10) zum Abteilen der Stiftkontakte (8) von dem Stiftkontaktstreifen (6), mit einer Setzeinrichtung (12) zur Ausführung eines Setzhubs zum Setzen der von dem Stiftkontaktstreifen (6) abgeteilten Stiftkontakte (8) in ein Kunststoffbauteil (14), wobei die Fördereinheit (4), die Trenneinrichtung (10) und die Setzeinrichtung (12) dazu eingerichtet sind, die von dem Stiftkontaktstreifen abgeteilten Stiftkontakte (8) gemäß einer vorgegebenen Taktung in das Kunststoffbauteil (14) zu setzen, wobei die Setzeinrichtung (12) eine Aushebeeinrichtung (22) aufweist, die dazu eingerichtet ist, eine Schwenkbewegung als Teil des Setzhubs gemäß der vorgegebenen Taktung auszuführen, wobei die Setzeinrichtung (12) einen ersten servomotorischen Antrieb (20) aufweist, wobei der erste servomotorische Antrieb dazu eingerichtet ist, einen linearen Hub als Teil des Setzhubs zum Setzen von Stiftkontakten (8) gemäß der vorgegebenen Taktung auszuführen und wobei der erste servomotorische Antrieb ein Linear-Servomotor ist.

## Beschreibung

Die vorliegende Erfindung betrifft eine Stiftkontakteinsetzmaschine, mit einer Fördereinheit zum Fördern eines Stiftkontaktstreifens, wobei der Stiftkontaktstreifen eine Mehrzahl miteinander verbundener, parallel zueinander aufgereihter Stiftkontakte aufweist, mit einer Trenneinrichtung zum Abteilen der Stiftkontakte von dem Stiftkontaktstreifen, mit einer Setzeinrichtung zur Ausführung eines Setzhubs zum Setzen der von dem Stiftkontaktstreifen abgeteilten Stiftkontakte in ein Kunststoffbauteil, wobei die Fördereinheit, die Trenneinrichtung und die Setzeinrichtung dazu eingerichtet sind, die von dem Stiftkontaktstreifen abgeteilten Stiftkontakte gemäß einer vorgegebenen Taktung in das Kunststoffbauteil zu setzen, wobei die Setzeinrichtung eine Aushebeeinrichtung aufweist, die dazu eingerichtet ist, eine Schwenkbewegung als Teil des Setzhubs gemäß der vorgegebenen Taktung auszuführen. Weiter betrifft die Erfindung ein Verfahren zum Setzen von Stiftkontakten in ein Kunststoffbauteil.

Stiftkontakteinsetzmaschinen werden z.B. zur Bestückung von im Spritzgussverfahren hergestellten Kunststoffgehäusen mit Stiftkontakten verwendet. Dieses Bestücken wird fachüblich als "Setzen" bzw. als "Stitching" bezeichnet. Hierbei werden vollautomatisch z.B. 300 Stiftkontakte pro Minute in entsprechend zugeführte Kunststoffgehäuse gesetzt. Die zu setzenden Stiftkontakte werden üblicherweise als Stiftkontaktstreifen bereitgestellt und aus diesen vor dem Setzen vereinzelt.

Bekannt ist, dass die zu erzeugenden Einzelbewegungen der Prozessschritte "Zuführen", "Trennen" und "Setzen" in einer solchen Stiftkontakteinsetzmaschine durch eine mechanische Kopplung mithilfe einer Kurvenscheibe bzw. einer Königswelle synchronisiert werden. Der Antrieb erfolgt dabei zentral durch einen einzelnen Motor, dessen Rotation mittels der mechanischen Kopplung in die erforderlichen Förder-, Trenn- und Hubbewegungen umgesetzt wird. Die Verwendung einer solchen mechanischen Kopplung hat den Vorteil, dass die Synchronisierung der einzelnen Arbeitsschritte eines Taktes durch die Mechanik fest vorgeben ist und auch für hohe Bestückungsfrequenzen bzw. hohe Taktzahlen robust funktioniert. Hierbei ist jedoch nachteilig, dass die Möglichkeit einer individuellen Anpassung der mechanisch gekoppelten Einzelbewegungen sehr beschränkt bzw. nicht gegeben ist.

Vor diesem Hintergrund liegt der vorliegenden Erfindung die technische Problemstellung zugrunde, eine Stiftkontakteinsetzmaschine der eingangs genannten Art anzugeben, die eine verbesserte Steuerung der Prozessschritte zum automatisierten Setzen von Stiftkontakten ermöglicht, insbesondere eine individuelle Steuerung der Prozessschritte zum automatisierten Setzen von Stiftkontakten ermöglicht. Weiter soll ein verbessertes Verfahren zum Setzen von Stiftkontakten in ein Kunststoffbauteil angegeben werden.

Die voranstehend beschriebene, technische Problemstellung wird jeweils mit den Merkmalen der unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung eine Stiftkontakteinsetzmaschine, mit einer Fördereinheit zum Fördern eines Stiftkontaktstreifens, wobei der Stiftkontaktstreifen eine Mehrzahl miteinander verbundener, parallel zueinander aufgereihter Stiftkontakte aufweist, mit einer Trenneinrichtung zum Abteilen der Stiftkontakte von dem Stiftkontaktstreifen, mit einer Setzeinrichtung zur Ausführung eines Setzhubs zum Setzen der von dem Stiftkontaktstreifen abgeteilten Stiftkontakte in ein Kunststoffbauteil, wobei die Fördereinheit, die Trenneinrichtung und die Setzeinrichtung dazu eingerichtet sind, die von dem Stiftkontaktstreifen abgeteilten Stiftkontakte gemäß einer vorgegebenen Taktung in das Kunststoffbauteil zu setzen, wobei die Setzeinrichtung eine Aushebeeinrichtung aufweist, die dazu eingerichtet ist, eine Schwenkbewegung als Teil des Setzhubs gemäß der vorgegebenen Taktung auszuführen. Die Stiftkontakteinsetzmaschine zeichnet sich dadurch aus, dass die Setzeinrichtung einen ersten servomotorischen Antrieb aufweist, wobei der erste servomotorische Antrieb dazu eingerichtet ist, einen linearen Hub als Teil des Setzhubs zum Setzen von Stiftkontakten gemäß der vorgegebenen Taktung auszuführen und wobei der erste servomotorische Antrieb ein Linear-Servomotor ist.

Dadurch, dass servomotorische Antrieb der Setzeinrichtung ein Linear-Servomotor ist, ist dieser Antrieb separat und unabhängig von weiteren Antrieben steuerbar.

Es kann vorgesehen sein, dass die Fördereinheit einen zweiten servomotorischen Antrieb aufweist, die Trenneinrichtung einen dritten servomotorischen Antrieb aufweist und die Aushebeeinrichtung einen vierten servomotorischen Antrieb aufweist.

Die Fördereinheit, die Trenneinrichtung und die Setzeinrichtung weisen daher jeweils mindestens einen eigenen, separaten Antrieb auf und sind demnach separat und unabhängig voneinander steuerbar. Insbesondere ist keine mechanische Kopplung der Fördereinheit, der Trenneinrichtung und der Setzeinrichtung vorgesehen. Die Kinematik, d.h. die Verfahrwege und -zeiten bzw. der Hub und Takt der Fördereinheit, der Trenneinrichtung und der Setzeinrichtung sind daher insbesondere unabhängig und separat voneinander steuerbar.

So können z.B. eine Hubtiefe oder Verfahrzeiten, Beschleuniguungen oder Geschwindigkeiten der Setzeinrichtung angepasst werden, ohne die Kinematik der Trenneinrichtung und/oder der Fördereinheit zu beeinflussen - oder umgekehrt. Gleichermaßen kann daher auch die jeweilige Kinematik der Trenneinrichtung und/oder der Fördereinheit individuell eingestellt werden.

Gegenüber einer fest vorgegebenen, mechanischen Kopplung hat die Bereitstellung separater, voneinander unabhängiger, servomotorischer Antriebe den Vorteil einer verbesserten Einstellbarkeit und einer kostengünstigeren Wartung. Zudem kann die Anzahl der mechanischen Komponenten insgesamt reduziert werden.

Wenn im vorliegenden Text vom Abteilen der Stiftkontakte von dem Stiftkontaktstreifen gesprochen wird, so handelt es sich dabei um ein Vereinzeln der Stiftkontakte von dem Stiftkontaktstreifen. Nach dem Abteilen bzw. Vereinzeln besteht daher für den jeweiligen abgeteilten bzw. vereinzelten Stiftkontakt kein stoffschlüssiger Zusammenhang mehr zu den jeweiligen vormals im Stiftkontaktstreifen benachbarten Stiftkontakten. Nach dem Abteilen bzw. Vereinzeln liegt jeder der abgeteilten bzw. vereinzelten Stiftkontakt daher als einzelner Stiftkontakt vor.

Jeder der Stiftkontakte kann als integralen Bestandteil einen Bund aufweisen, mit dem der Stiftkontakt beim Setzen gegen einen Schieber bzw. Setzkopf der Setzeinrichtung abgestützt ist. Der Bund kann in Setzrichtung konisch verjüngt sein. Der Bund kann ein Profil aufweisen, das im gesetzten Zustand zur Verrastung am Kunststoffbauteil dient. Der Bund kann als tannenbaumförmiges Rastprofil ausgebildet sein, das nach dem Setzen in dem Material des Kunststoffbauteils sitzt und dort verkrallt bzw. verrastet ist.

Die Setzeinrichtung kann dazu eingerichtet sein, jeden abgeteilten bzw. vereinzelten Stiftkontakt einzeln mit einem separaten Setzhub in das zu bestückende Kunststoffbauteil zu setzen. So können z.B. zehn oder mehr Stiftkontakte sequenziell mit zehn oder mehr separaten Setzhüben in das zu bestückende Kunststoffbauteil gesetzt werden.

Die Setzeinrichtung kann dazu eingerichtet sein, mehrere Stiftkontakte gleichzeitig mit einem Setzhub in das zu bestückende Kunststoffbauteil zu setzen. Beispielsweise können bis zu sechs abgeteilte bzw. vereinzelte Stiftkontakte gleichzeitig mit einem Setzhub in das zu bestückende Kunststoffbauteil gesetzt werden. Ein Setzen von z.B. 20 Stiftkontakten erfordert daher z.B. vier Setzhübe, mit denen jeweils fünf abgeteilte bzw. vereinzelte Stiftkontakte gleichzeitig in das zu bestückende Kunststoffbauteil gesetzt werden. In diesem Fall können die simultan zu setzenden Stiftkontakte gleichzeitig mit einem einzelnen Stanzhub mittels der Trenneinrichtung vereinzelt und für die Setzeinrichtung bereitgestellt werden.

Der Setzeinrichtung können daher für jeden Setzhub von der Fördereinheit und der Trenneinrichtung ein abgeteilter bzw. vereinzelter Stiftkontakt zugeführt werden oder mehrere abgeteilte bzw. vereinzelte Stiftkontakte zugeführt werden.

Der Setzhub ist vorliegend einer überlagerte Bewegung des ersten servomotorischen Antriebs und des vierten servomotorischen Antriebs. Während der erste servomotorische Antrieb den linearen Hub bereitstellt, der die eigentliche Fixierung des zu setzenden Stiftkontakts im zu bestückenden Kunststoffbauteil bewirkt, überlagert der vierte servomotorische Antrieb diesem linearen Hub eine Schwenkbewegung, insbesondere für einen Rückhub nach dem Setzen des Stiftkontakts. Diese Schwenkbewegung der Aushebeeinrichtung bewirkt ein Entkoppeln der Setzeinrichtung von einem in das Kunststoffbauteil gesetzten Stiftkontakt. So kann sichergestellt werden, dass ein in das Kunststoffbauteil eingesetzter Stiftkontakt beim Rückhub nicht wieder aus dem Kunststoffbauteil gezogen wird.

Die Stiftkontakteinsetzmaschine kann dazu eingerichtet sein, bis zu 400 Stiftkontakte pro Minute zu setzen. Die Stiftkontakteinsetzmaschine kann insbesondere dazu eingerichtet sein, bis zu 500 Stiftkontakte pro Minute zu setzen. Die Verwendung separater servomotorischer Antriebe ermöglicht eine Erhöhung der Taktung im Vergleich zu bekannten Lösungen mit mechanischer Kopplung, z.B. unter Verwendung einer Königswelle mit Kurvenscheiben.

Die Stiftkontakteinsetzmaschine kann zum Bestücken verschiedener Kunststoffbauteile verwendet werden. So können z.B. Steckleisten, Steckverbinder, Sockel, Stiftleisten, eingefasste oder eingehauste Steckverbinder, Buchsenleisten, Vorspritzlinge und dergleichen hergestellt bzw. mit Stiftkontakten bestückt werden. Auch kann die Stiftkontakteinsetzmaschine zum Bestücken von Vorspritzlungen verwendet werden, die nach dem Bestücken mit Stiftkontakten einer Spritzgussmaschine zugeführt und im bestückten Zustand umspritzt werden.

Der erste servomotorische Antrieb ist vorliegend ein Linear-Servomotor, der dazu eingerichtet ist, den linearen Hub als Teil des Setzhubs zum Setzen von Stiftkontakten gemäß der vorgegebenen Taktung auszuführen. Der lineare Hub wird dabei insbesondere unmittelbar durch einen Hubkolben des Linear-Servomotors bewirkt, ohne, dass eine Bewegung des Hubkolbens durch eine Mechanik übersetzt oder umgelenkt wird. Der Linear-Servomotor erzeugt daher als Direktantrieb unmittelbar den linearen Hub als Teil des Setzhubs zum Setzen der Stiftkontakte.

Der zweite servomotorische Antrieb kann ein rotatorischer Servomotor sein. Dabei kann eine rotatorische Stellbewegung mittels einer Mechanik in eine lineare Förderbewegung umgesetzt werden. Der zweite servomotorische Antrieb kann alternativ ein Linear-Servomotor sein.

Der dritte servomotorische Antrieb kann ein rotatorischer Servomotor sein. Dabei kann eine rotatorische Stellbewegung mittels einer Mechanik in eine lineare Trenn- bzw. Stanzbewegung umgesetzt werden. Der dritte servomotorische Antrieb kann alternativ ein Linear-Servomotor sein.

Der vierte servomotorische Antrieb kann ein rotatorischer Servomotor sein. Dabei kann eine rotatorische Stellbewegung mittels eines Exzenters in eine Hebe- und Senkbewegung bzw. Schwenkbewegung umsetzt werden. Der vierte servomotorische Antrieb kann alternativ ein Linear-Servomotor sein.

Die rotatorischen Servomotoren können z.B. eine oder mehrere der folgenden Eigenschaften aufweisen: eine Bemessungsdrehzahl von bis zu 6000U/min; ein Drehmoment von 0,5 bis 10 Nm; ein Trägheitsmoment kleiner oder gleich 1,0 kgcm².

Die Stiftkontakteinsetzmaschine kann eine Einrichtung zum Zuführen und Positionieren von Kunststoffbauteilen aufweisen, die dazu eingerichtet ist, einzelne Kunststoffbauteile gegenüber der Setzeinrichtung zu positionieren, wobei die Einrichtung zum Zuführen und Positionieren von Kunststoffbauteilen einen fünften servomotorischen Antrieb aufweist.

Jedes der einzelnen Kunststoffbauteile kann mit einer Mehrzahl von Stiftkontakten bestückt werden. Dabei kann vorgesehen sein, dass die Setzeinrichtung die zu setzenden Stiftkontakte immer an derselben Stelle zuführt, während der fünfte servomotorische Antrieb eine Teilungsbewegung entsprechend eines minimalen Setzabstands oder eines Vielfachen des minimalen Setzabstands benachbarter Stiftkontakte im Kunststoffbauteil durchführt und das Kunststoffbauteil auf diese Weise sequenziell mit Stiftkontakten bestückt wird.

Der fünfte servomotorische Antrieb kann ein Linearantrieb bzw. Linear-Servomotor sein.

Die Einrichtung zum Zuführen und Positionieren von Kunststoffbauteilen kann einen sechsten servomotorischen Antrieb aufweisen. Der sechste servomotorische Antrieb kann ein Linearantrieb bzw. Linear-Servomotor sein.

Der fünfte und sechste servomotorische Antrieb können senkrecht zueinander orientiert sein und insbesondere einen Kreuztischantrieb ausbilden. Das Kunststoffbauteil kann auf diese Weise entsprechend vorgegebener Montagepositionen der Stiftkontakte rasterartig verfahren und in Zeilen und Spalten teilweise oder vollständig mit Stiftkontakten bestückt werden.

Die Stiftkontakteinsetzmaschine kann eine Steuereinrichtung zur Ansteuerung mindestens eines servomotorischen Antriebs aufweisen

Die Steuereinrichtung kann zur Ansteuerung des ersten servomotorischen Antriebs, des zweiten servomotorischen Antriebs, des dritten servomotorischen Antriebs und des vierten servomotorischen Antriebs gemäß der vorgegebenen Taktung aufweisen, wobei insbesondere keine mechanische Kopplung, wie eine Kurvenscheibe, eine Königswelle oder dergleichen, sondern eine virtuelle Kopplung zur Steuerung der Bewegungen der Setzeinrichtung, der Fördereinheit und der Trenneinrichtung vorgesehen ist.

Eine Synchronisation des ersten servomotorischen Antriebs, des zweiten servomotorischen Antriebs, des dritten servomotorischen Antriebs und des vierten servomotorischen Antriebs gemäß der vorgegebenen Taktung kann mittels einer Software der Steuerung erfolgen, wobei die Steuerung eine "virtuelle Königswelle" darstellen kann.

Das Konzept der virtuellen Königswelle kann z.B. dadurch innerhalb der Steuerung implementiert werden, dass eine virtuelle Leitachse, die auch virtueller Master genannt werden kann, den Takt für einzelne virtuelle Achsmodule der Steuerung vorgibt. Jedem der servomotorischen Antriebe kann ein eigenes virtuelles Achsmodul zur Steuerung des betreffenden servomotorischen Antriebs zugeordnet sein. Die virtuellen Achsmodule, die auch als virtuelle Slave-Achsen bezeichnet werden können, steuern den Bewegungsablauf des jeweils zugeordneten servomotorischen Antriebs innerhalb des von der virtuellen Leitachse vorgegebenen Takts.

Mit anderen Worten erfolgt eine virtuelle Kopplung bzw. virtuelle Synchronisation der Bewegungen der servomotorischen Antriebe. Auf diese Weise führt eine Erhöhung oder Reduzierung des vorgegebenen Takts der Leitachse automatisch zur Anpassung der Bewegungsabläufe aller servomotorischen Antriebe entsprechend der vorgegebenen virtuellen Kopplung.

Gleichermaßen kann die Steuereinrichtung zur Ansteuerung des fünften servomotorischen Antriebs gemäß der vorgegebenen Taktung eingerichtet sein und/oder zur Ansteuerung des sechsten servomotorischen Antriebs gemäß der vorgegebenen Taktung eingerichtet sein.

D.h. auch der fünfte und/oder der sechste servomotorische Antrieb können mithilfe der Steuerung innerhalb der vorgegebenen Taktung synchronisiert werden. Hierbei kann insbesondere das Konzept der virtuellen Königswelle umgesetzt werden.

Ein weiterer Vorteil der virtuellen Kopplung der servomotorischen Antriebe ist, dass diese mittels der Software in einfacher Weise von der Leitachse entkoppelt und wieder mit der Leitachse gekoppelt werden können. Hierzu bedarf es im Vergleich zu einer fest vorgegebenen mechanischen Kopplung keines Eingriffs in die Mechanik bzw. keiner mechanischen Kopplung oder Entkopplung.

Beispielsweise kann die Einrichtung zum Zuführen und Positionieren von Kunststoffbauteilen während des Beladens mit einem zu bestückenden Kunststoffbauteil und während des Entladens eines bestückten Kunststoffbauteils steuerungstechnisch von der Leitachse entkoppelt sein.

Der erste servomotorische Antrieb ist, wie bereits erwähnt, bevorzugt ein Linear-Servomotor, der dazu eingerichtet ist, den linearen Hub als Teil des Setzhubs zum Setzen von Stiftkontakten gemäß der vorgegebenen Taktung auszuführen. Die Steuereinrichtung kann zur Überwachung und Anpassung einer Hubtiefe des Linear-Servomotors eingerichtet sein. So kann eine Hubtiefe des Setzhubs individuell gesteuert werden.

Beispielsweise kann vorgesehen sein, dass für ein zu bestückendes Kunststoffbauteil verschiedene Einstecktiefen der zu setzenden Stiftkontakte im Kunststoffbauteil realisiert werden. Dies ist mit der Steuerung über eine mechanische Königswelle nicht möglich. Die Hubtiefe des Linear-Servomotors kann insbesondere bis zu 100 mm betragen, bevorzugt bis zu 80 mm betragen. Die Hubtiefe kann synonym auch als Verfahrweg des Linear-Servomotors bezeichnet werden.

Es kann vorgesehen sein, dass ein Hubkolben des Linear-Servomotors mittels eines Gleitlagers geführt ist. Auf diese Weise kann der Hubkolben während des Setzvorgangs stabilisiert werden.

Die Setzeinrichtung kann einen Setzkopf aufweisen, wobei der Setzkopf eine einzelne Nut zum Aufnehmen eines von dem Stiftkontaktstreifen abgeteilten Stiftkontakts aufweist oder wobei der Setzkopf mehrere parallele Nuten zum Aufnehmen jeweils eines der von dem Stiftkontaktstreifen abgeteilten Stiftkontakte aufweist, insbesondere bis zu sechs oder genau sechs Nuten zum Aufnehmen jeweils eines der von dem Stiftkontaktstreifen abgeteilten Stiftkontakte aufweist. Jede Nut kann daher einen von dem Stiftkontaktstreifen abgeteilten Stiftkontakt aufnehmen.

Ein Setzkopf, der z.B. sechs Nuten aufweist, kann daher, je nach Montageanforderungen, für jeden Setzhub mit einem Stiftkontakt oder mit mehreren Stiftkontakten bestückt werden, d.h. mit bis zu sechs Stiftkontakten bestückt werden.

Der Setzkopf kann dazu eingerichtet sein, die zu setzenden Stiftkontakte in das Kunststoffbauteil zu schieben. Hierzu bildet der Setzkopf einen Anschlag aus, an dem die zu setzenden Stiftkontakte während des Setzvorgangs anliegen. Der Setzkopf dient daher zur Kraft- und Hubübertragung vom ersten servomotorischen Antrieb auf die zu setzenden Stiftkontakte.

Gemäß einem zweiten Aspekt betrifft die Erfindung ein Verfahren zum Setzen von Stiftkontakten in ein Kunststoffbauteil, wobei eine erfindungsgemäße Stiftkontakteinsetzmaschine verwendet wird, wobei die folgenden Verfahrensschritte durchgeführt werden: Fördern eines Stiftkontaktstreifens mittels der Fördereinheit; Abteilen von Stiftkontakten aus dem Stiftkontaktstreifen mittels der Trenneinrichtung; Setzen der Stiftkontakte in ein Kunststoffbauteil mittels der Setzeinrichtung.

Es kann vorgesehen sein, dass der erste servomotorische Antrieb, der zweite servomotorische Antrieb, der dritte servomotorische Antrieb und der vierte servomotorische Antrieb gemäß der vorgegebenen Taktung gesteuert werden.

Die von dem Stiftkontaktstreifen abgeteilten Stiftkontakte können einzeln und aufeinanderfolgend in das Kunststoffbauteil eingesetzt werden, wobei für jeden zu setzenden Stiftkontakt ein separater Setzhub mittels der Setzeinrichtung ausgeführt wird.

Alternativ können zwei oder mehr von dem Stiftkontaktstreifen abgeteilte, vereinzelte Stiftkontakte gleichzeitig in das Kunststoffbauteil gesetzt werden, wobei für die gleichzeitig zu setzenden Stiftkontakte ein gemeinsamer Setzhub mittels der Setzeinrichtung ausgeführt wird.

Das Kunststoffbauteil kann im Spritzgussverfahren hergestellt worden sein.

Das Kunststoffbauteil kann ein Vorspritzling sein, wobei nach dem Setzen der Stiftkontakte die folgenden Verfahrensschritte durchgeführt werden können: Einsetzen des mit den Stiftkontakten bestückten Vorspritzlings in eine Spritzgussform; Umspritzen des mit den Stiftkontakten bestückten Vorspritzlings mit einem Kunststoff, um ein den mit Stiftkontakten bestückten Vorspritzling aufnehmendes Gehäuse auszubilden.

Der Vorspritzling kann eine Kunststoffplatte sein bzw. kann ein plattenförmiges Kunststoffbauteil sein.

Es kann vorgesehen sein, dass an dem Vorspritzling nach dem Setzen der Stiftkontakte und vor dem Umspritzen ein weiteres Kunststoffbauteil montiert wird, das zusammen mit dem bestückten Vorspritzling der Spritzgussform zugeführt und umspritzt wird.

Das Verfahren kann daher nach dem Setzen der Stiftkontakte und vor dem Einsetzen des mit den Stiftkontakten bestückten Vorspritzlings in eine Spritzgussform folgenden Verfahrensschritt aufweisen: Montieren eines weiteren Kunststoffbauteils an dem Vorspritzling.

Das Montieren des weiteren Kunststoffbauteils an dem Vorspritzling kann zum Fixieren der an dem Vorspritzling gesetzten Stiftkontakte dienen.

Das Verfahren kann daher nach dem Setzen der Stiftkontakte und vor dem Einsetzen des mit den Stiftkontakten bestückten Vorspritzlings in eine Spritzgussform folgende Verfahrensschritte aufweisen: Montieren eines weiteren Kunststoffbauteils an dem Vorspritzling und Fixieren der Stiftkontakte an dem Vorspritzling mittels des weiteren Kunststoffbauteils.

Es kann vorgesehen sein, dass die Stiftkontakte nach dem Setzen, d.h. in dem am Vorspritzling gehaltenen Zustand, gebogen werden. Das Montieren des weiteren Kunststoffbauteils kann zur Fixierung der Stiftkontakte im verformten Zustand dienen und/oder kann zur Fixierung des verformten Zustands der Stiftkontakte dienen.

Es kann vorgesehen sein, dass zusammen mit dem bestückten Vorformling weitere Komponenten innerhalb der Spritzgussform angeordnet und unter Ausbildung des Gehäuses umspritzt werden. Bei den weiteren Komponenten kann es sich z.B. um Gewindebuchsen, Clips, Verstärkungselemente oder ähnliche Bauteile handeln.

Das Gehäuse kann mit dem umspritzten Vorspritzling einen Anschlusstecker ausbilden, der mehr als 100 Pole aufweist, insbesondere weniger als 200 Pole aufweist, wobei jeder Stiftkontakt einen der Pole ausbildet.

Nachfolgend wir die Erfindung anhand von Zeichnungen näher beschrieben. Es zeigen jeweils schematisch:
- Fig. 1: eine erfindungsgemäße Stiftkontakteinsetzmaschine;
- Fig. 2: Verfahrensschritte eines erfindungsgemäßen Verfahrens;
- Fig. 3A: einen Setzkopf in einer perspektivischen Ansicht;
- Fig. 3B: den Setzkopf aus Fig. 3A in einer Seitenansicht;
- Fig. 3C: den Setzkopf aus Fig. 3A in einer Ansicht von unten;
- Fig. 3D: eine vergrößerte Einzelheit des Setzkopfs gemäß dem Ausschnitt A aus Fig. 3C;
- Fig. 4A: den Setzkopf mit einer Platte;
- Fig. 4B: den Setzkopf mit einer Platte;
- Fig. 5A: einen Vorspritzling mit gesetzten Stiftkontakten;
- Fig. 5B: den Vorspritzling mit gesetzten Stiftkontakten aus Fig. 5A in einer Spritzgussform;
- Fig. 5C: den Vorspritzling mit gesetzten Stiftkontakten aus Fig. 5A mit einem umspritzten Gehäuse.

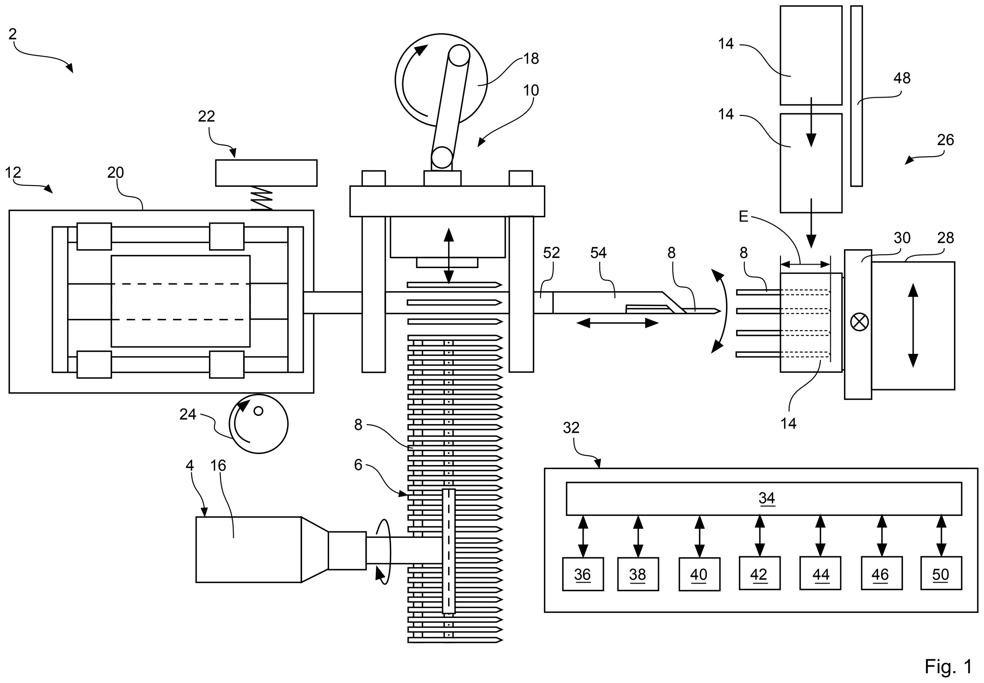

Fig. 1 zeigt eine Stiftkontakteinsetzmaschine 2. Die Stiftkontakteinsetzmaschine 2 hat eine Fördereinheit 4 zum Fördern eines Stiftkontaktstreifens 6.

Der Stiftkontaktstreifen 6 weist eine Mehrzahl miteinander verbundener, parallel zueinander aufgereihter Stiftkontakte 8 auf.

Die Stiftkontakteinsetzmaschine 2 hat eine Trenneinrichtung 10 zum Abteilen der Stiftkontakte 8 von dem Stiftkontaktstreifen 6. Die Trenneinrichtung 10 ist eine Stanzvorrichtung.

Die Stiftkontakteinsetzmaschine 2 hat eine Setzeinrichtung 12 zur Ausführung eines Setzhubs zum Setzen der von dem Stiftkontaktstreifen 6 abgeteilten Stiftkontakte 8 in ein Kunststoffbauteil 14.

Das Kunststoffbauteil 14 ist ein im Spritzgussverfahren hergestelltes Kunststoffgehäuse. Das Kunststoffbauteil 14 weist keine im Spritzgussverfahren umspritzten Kontakte auf, sondern wird ausschließlich mittels der Stiftkontakteinsetzmaschine 2 mit Stiftkontakten 8 bestückt.

Die Fördereinheit 4, die Trenneinrichtung 10 und die Setzeinrichtung 12 sind dazu eingerichtet, eine Mehrzahl von Stiftkontakten 8 gemäß einer vorgegebenen Taktung in das Kunststoffbauteil 14 zu setzen. Dabei werden für jeden Takt einer der Stiftkontakte 8 oder mehrere der Stiftkontakte 8 mit einer vorgegebenen Einstecktiefe E in das Kunststoffbauteil 14 gesetzt. Das Setzen der Stiftkontakte 8 erfolgt sequenziell gemäß der vorgegebenen Taktung, wobei für jeden Takt ein Stiftkontakt 8 oder mehrere Stiftkontakte 8 gesetzt werden. Die Einstecktiefe E kann für einzelne Stiftkontakte 8 ggf. individuell eingestellt sein und damit innerhalb des Kunststoffbauteils variieren.

Die Setzeinrichtung 12 weist einen ersten servomotorischen Antrieb 20 auf. Der erste servomotorische Antrieb 20 ist ein Linear-Servomotor. Der erste servomotorische Antrieb 20 ist dazu eingerichtet, einen linearen Hub als Teil des Setzhubs zum Setzen von Stiftkontakten 8 gemäß der vorgegebenen Taktung auszuführen.

Die Fördereinheit 4 weist einen zweiten servomotorischen Antrieb 16 auf. Der zweite servomotorische Antrieb 16 ist ein rotatorischer Servomotor.

Die Trenneinrichtung 10 weist einen dritten servomotorischen Antrieb 18 auf. Der dritte servomotorische Antrieb 18 ist ein rotatorischer Servomotor.

Die Setzeinrichtung 12 weist eine Aushebeeinrichtung 22 auf. Die Aushebeeinrichtung 22 ist dazu eingerichtet ist, eine Schwenkbewegung als Teil des Setzhubs gemäß der vorgegebenen Taktung auszuführen, wobei die Aushebeeinrichtung 22 einen vierten servomotorischen Antrieb 24 aufweist. Der vierte servomotorische Antrieb 24 ist ein rotatorischer Servomotor.

Die Aushebeeinrichtung 22 bildet eine Aufhängung für den ersten servomotorischen Antrieb 20 aus. Dabei ist der vierte servomotorische Antrieb 24 als Exzenter ausgeführt, der eine Schwenkbewegung des ersten servomotorischen Antriebs 20 bewirkt. Damit kann dem linearen Hub eine Schwenkbewegung als Teil des Setzhubs überlagert werden.

Die Stiftkontakteinsetzmaschine 2 weist eine Einrichtung 26 zum Zuführen und Positionieren von Kunststoffbauteilen 14 auf, die dazu eingerichtet ist, einzelne Kunststoffbauteile 14 gegenüber der Setzeinrichtung 12 zu positionieren.

Die Einrichtung 26 zum Zuführen und Positionieren von Kunststoffbauteilen 14 weist einen fünften servomotorischen Antrieb 28 und einen sechsen servomotorischen Antrieb 30 auf. Der fünfte servomotorische Antrieb 28 und der sechste servomotorische Antrieb 30 bilden eine Kreuztisch zum Positionieren der Kunststoffbauteile 14 aus.

Die Stiftkontakteinsetzmaschine 2 weist eine Steuereinrichtung 32 zur Ansteuerung des ersten servomotorischen Antriebs 20, des zweiten servomotorischen Antriebs 16, des dritten servomotorischen Antriebs 18, des vierten servomotorischen Antriebs 24, des fünften servomotorischen Antriebs 28 und des sechsten servomotorischen Antriebs 30 auf.

Die Steuereinrichtung 32 bildet eine virtuelle Kopplung bzw. virtuelle Synchronisation der servomotorischen Antriebe mittels einer virtuellen Königswelle 34 ab. Die virtuelle Königswelle 34 ist eine virtuelle Leitachse bzw. ein virtueller Master, die eine Taktung vorgibt, innerhalb derer zugeordnete virtuelle Achsmodule synchronisiert werden.

Jedem servomotorischen Antrieb ist ein eigenes virtuelles Achsmodul zugeordnet, das den betreffenden servomotorischen Antrieb individuell steuert.

Dem ersten servomotorischen Antrieb 20 ist ein erstes virtuelles Achsmodul 36 zugeordnet. Dem zweiten servomotorischen Antrieb 16 ist ein zweites virtuelles Achsmodul 38 zugeordnet. Dem dritten servomotorischen Antrieb 18 ist ein drittes virtuelles Achsmodul 40 zugeordnet. Dem vierten servomotorischen Antrieb 24 ist ein viertes virtuelles Achsmodul 42 zugeordnet. Dem fünften servomotorischen Antrieb 28 ist ein fünftes virtuelles Achsmodul 44 zugeordnet. Dem sechsten servomotorischen Antrieb 30 ist ein sechstes virtuelles Achsmodul 46 zugeordnet.

Eine Zuführung der Kunststoffbauteile 14 kann ebenfalls über einen servomotorischen Antrieb erfolgen, so dass ein siebter servomotorischer Antrieb 48 mit einem zugeordneten siebten virtuellen Achsmodul 50 vorgesehen sein kann. Die Zuführung der Kunststoffbauteile 14 kann alternativ mittels eines Roboters erfolgen, wie einem SCARA-Roboter oder dergleichen.

Der jeweilige fünfte, sechste und siebte servomotorische Antrieb kann jeweils ein Linear-Servomotor sein.

Der erste servomotorische Antrieb 16 ist ein Linear-Servomotor, der dazu eingerichtet ist, einen linearen Hub als Teil des Setzhubs zum Setzen von Stiftkontakten 8 gemäß der vorgegebenen Taktung auszuführen.

Die Steuereinrichtung 32 ist zur Überwachung und Anpassung einer Hubtiefe bzw. Einstecktiefe E des Linear-Servomotors 16 eingerichtet.

Ein Hubkolben 52 des Linear-Servomotors 16 trägt endseitig einen Setzkopf 54, der die abgeteilten Stiftkontakte 8 nach dem Vereinzeln aufnimmt und in das Kunststoffbauteil 14 setzt. Der Setzkopf 54 kann zum Aufnehmen eines einzelnen Stiftkontakts 8 oder mehrerer Stiftkontakte 8 eingerichtet sein.

Es kann vorgesehen sein, dass die Trenneinrichtung 10 dazu eingerichtet ist, mit einem einzelnen Stanzhub gleichzeitig mehrere Stiftkontakte 8 von dem Stiftkontaktstreifen zu vereinzeln und für den Setzkopf 54 bereitzustellen. In diesem Fall übernimmt der Setzkopf 54 für jeden Setzhub mehrere abgetrennte Stiftkontakte 8 von der Trenneinrichtung 10 und setzt diese simultan in das Gehäuse 14.

Es kann vorgesehen sein, dass die Trenneinrichtung 10 dazu eingerichtet ist, mit einem einzelnen Stanzhub einen einzelnen Stiftkontakt 8 von dem Stiftkontaktstreifen zu vereinzeln und für den Setzkopf 54 bereitzustellen. In diesem Fall übernimmt der Setzkopf 54 für jeden Setzhub einen einzelnen abgetrennten Stiftkontakt 8 von der Trenneinrichtung 10 und setzt diesen in das Gehäuse 14.

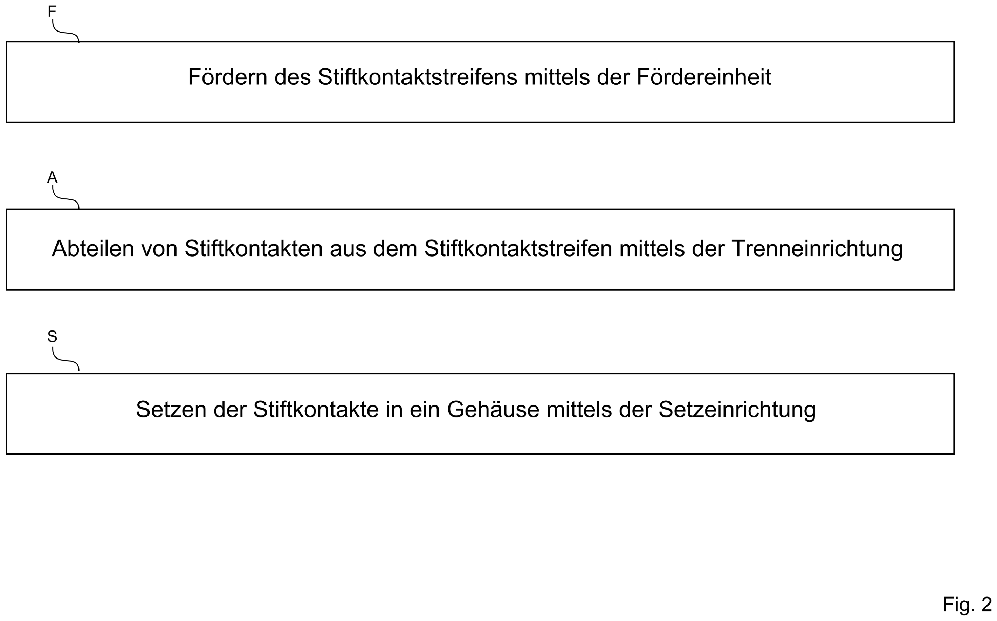

Erfindungsgemäß werden die folgenden Verfahrensschritte zur Verwendung der Stiftkontakteinsetzmaschine 2 mittels der Steuereinrichtung 32 gemäß der vorgegebene Taktung synchronisiert (Fig. 2):
(F) Fördern des Stiftkontaktstreifens 6 mittels der Fördereinheit 4;
(A) Abteilen eines einzelnen Stiftkontakts 8 oder mehrerer Stiftkontakte 8 aus dem Stiftkontaktstreifen 6 mittels der Trenneinrichtung 10;
(S) Setzen des einzelnen Stiftkontakts 8 oder der mehreren Stiftkontakte 8 in das Kunststoffbauteil 14 mittels der Setzeinrichtung 12.

Der erste servomotorische Antrieb 20, der zweite servomotorische Antrieb 16, der dritte servomotorische Antrieb 18 und der vierte servomotorische Antrieb 24 können gemäß der vorgegebenen Taktung angesteuert werden.

Wie bereits diskutiert, kann vorgesehen sein, dass für jeden einzelnen Takt der Taktung lediglich ein einzelner Stiftkontakt 8 aus dem Stiftkontaktstreifen 6 vereinzelt bzw. abteilt und gesetzt wird. Gemäß alternativer Ausführungsbeispiele kann vorgesehen sein, dass für jeden einzelnen Takt der Taktung eine Mehrzahl von Stiftkontakten 8 aus dem Stiftkontaktstreifen 6 vereinzelt bzw. abteilt und gesetzt werden. Insbesondere können für jeden einzelnen Takt der Taktung bis zu sechs Stiftkontakte 8 aus dem Stiftkontaktstreifen 6 vereinzelt bzw. abteilt und gesetzt werden.

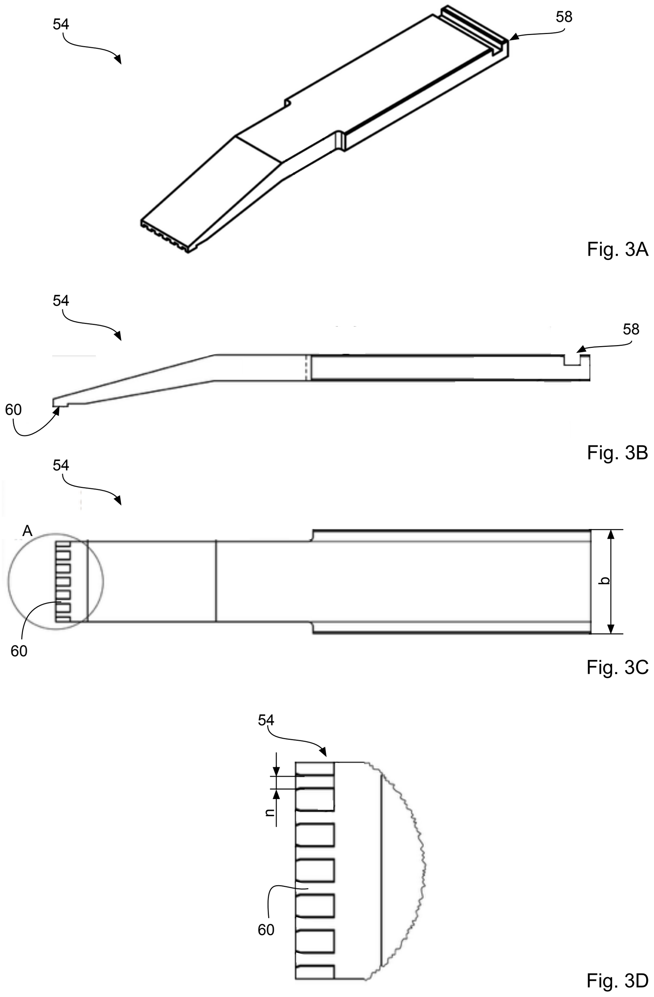

Fig. 3A zeigt den Setzkopf 54 in einer perspektivischen Ansicht. Der Setzkopf 54 ist ein Schieber und ist im montierten Zustand mit seinem Endabschnitt 58 mit dem Hubkolben 52 gekoppelt und setzt die Stiftkontakte 8 in das betreffende Kunststoffbauteil 14. Der Setzkopf 54 weist sechs Nuten 60 auf, um die vereinzelten bzw. abgetrennten Stiftkontakte 8 während des Setzhubs zu positionieren und zu führen.

Eine Breite b des Setzkopfs 54 beträgt ca. 20 mm (Fig. 3C). Gemäß alternativer Ausgestaltungen kann vorgesehen sein, dass eine Breite des Setzkopfs ausgewählt ist aus einem Bereich größer oder gleich 10 mm und kleiner oder gleich 25 mm.

Eine Nutbreite n beträgt ca. 0,9 mm (Fig. 3D). Gemäß alternativer Ausgestaltungen kann vorgesehen sein, dass eine Nutbreite ausgewählt ist aus einem Bereich größer oder gleich 0,5 mm und kleiner oder gleich 2 mm.

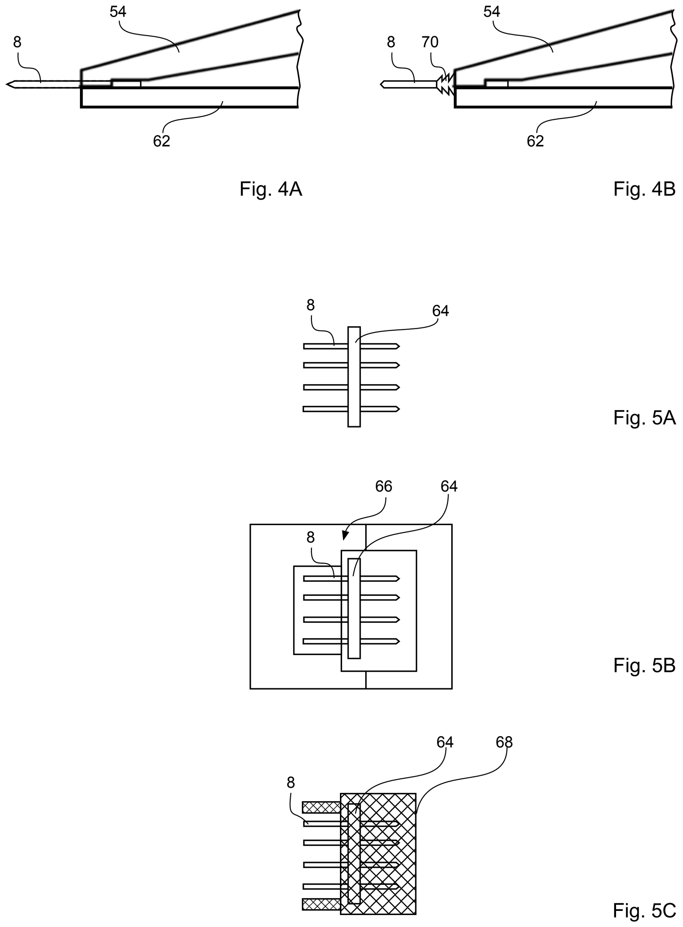

Dem Setzkopf 54 kann eine Platte 62 zugeordnet sein, die die Stiftkontakte 8 in vertikaler Richtung gegen Verlieren aus dem Setzkopf 54 sichert (Fig. 4A). Die Platte 62 kann während des Setzhubs mitbewegt werden, z.B. mittels eines pneumatischen Antriebs.

Jeder der Stiftkontakte 8 kann als integralen Bestandteil einen Bund 70 aufweisen, mit dem der jeweilige Stiftkontakt 8 beim Setzen gegen den Schieber 54 abgestützt ist (Fig. 4B).

Der Bund 70 kann als tannenbaumförmiges Rastprofil ausgebildet sein, das nach dem Setzen in dem Material des Kunststoffbauteils sitzt und dort verkrallt ist.

Das zu bestückende Kunststoffbauteil kann ein plattenförmiger Vorspritzling 64 sein. Fig. 5A zeigt den Vorspritzling 64 mit gesetzten Stiftkontakten 8.

Der Vorspritzling 64 mit gesetzten Stiftkontakten kann in einer Spritzgussform 66 mit einem Gehäuse 68 aus Kunststoff umspritzt werden.

Fig. 5C zeigt den Vorspritzling 64 mit gesetzten Stiftkontakten 8 aus Fig. 5A mit dem umspritzten Gehäuse 68.

### BEZUGSZEICHEN

- 2: Stiftkontakteinsetzmaschine
- 4: Fördereinheit
- 6: Stiftkontaktstreifen
- 8: Stiftkontakt
- 10: Trenneinrichtung
- 12: Setzeinrichtung
- 14: Kunststoffbauteil
- 16: zweiter servomotorischer Antrieb
- 18: dritter servomotorischer Antrieb
- 20: erster servomotorischer Antrieb
- 22: Aushebeeinrichtung
- 24: vierter servomotorische Antrieb
- 26: Einrichtung zum Zuführen und Positionieren von Kunststoffbauteilen
- 28: fünfter servomotorischer Antrieb
- 30: sechster servomotorischer Antrieb
- 32: Steuereinrichtung
- 34: virtuelle Königswelle
- 36: erstes virtuelles Achsmodul
- 38: zweites virtuelles Achsmodul
- 40: drittes virtuelles Achsmodul
- 42: viertes virtuelles Achsmodul
- 44: fünftes virtuelles Achsmodul
- 46: sechstes virtuelles Achsmodul
- 48: siebter servomotorischer Antrieb
- 50: siebtes virtuellen Achsmodul
- 52: Hubkolben
- 54: Setzkopf / Schieber
- 58: Endabschnitt
- 60: Nut
- 62: Platte
- 64: Vorspritzling
- 66: Spritzgussform
- 68: Gehäuse
- 70: Bund / Rastprofil

## Patentansprüche

1. Stiftkontakteinsetzmaschine,
mit einer Fördereinheit (4) zum Fördern eines Stiftkontaktstreifens (6), wobei der Stiftkontaktstreifen (6) eine Mehrzahl miteinander verbundener, parallel zueinander aufgereihter Stiftkontakte (8) aufweist,
mit einer Trenneinrichtung (10) zum Abteilen der Stiftkontakte (8) von dem Stiftkontaktstreifen (6),
mit einer Setzeinrichtung (12) zur Ausführung eines Setzhubs zum Setzen der von dem Stiftkontaktstreifen (6) abgeteilten Stiftkontakte (8) in ein Kunststoffbauteil (14), wobei die Fördereinheit (4), die Trenneinrichtung (10) und die Setzeinrichtung (12) dazu eingerichtet sind, die von dem Stiftkontaktstreifen abgeteilten Stiftkontakte (8) gemäß einer vorgegebenen Taktung in das Kunststoffbauteil (14) zu setzen,
wobei die Setzeinrichtung (12) eine Aushebeeinrichtung (22) aufweist, die dazu eingerichtet ist, eine Schwenkbewegung als Teil des Setzhubs gemäß der vorgegebenen Taktung auszuführen,
**dadurch gekennzeichnet, dass**
die Setzeinrichtung (12) einen ersten servomotorischen Antrieb (20) aufweist, wobei der erste servomotorische Antrieb dazu eingerichtet ist, einen linearen Hub als Teil des Setzhubs zum Setzen von Stiftkontakten (8) gemäß der vorgegebenen Taktung auszuführen und wobei der erste servomotorische Antrieb ein Linear-Servomotor ist.

2. Stiftkontakteinsetzmaschine nach Anspruch 1,
**dadurch gekennzeichnet, dass**
die Fördereinheit (4) einen zweiten servomotorischen Antrieb (16) aufweist,
die Trenneinrichtung (10) einen dritten servomotorischen Antrieb (18) aufweist und die Aushebeeinrichtung (22) einen vierten servomotorischen Antrieb (24) aufweist.

3. Stiftkontakteinsetzmaschine nach einem der voranstehenden Ansprüche,
**dadurch gekennzeichnet, dass**
eine Einrichtung (26) zum Zuführen und Positionieren von Kunststoffbauteilen (14) vorgesehen ist, die dazu eingerichtet ist, einzelne Kunststoffbauteil (14) gegenüber der Setzeinrichtung (12) zu positionieren, wobei die Einrichtung (26) zum Zuführen und Positionieren von Kunststoffbauteilen (14) einen fünften servomotorischen Antrieb (28) aufweist.

4. Stiftkontakteinsetzmaschine nach einem der voranstehenden Ansprüche,
**dadurch gekennzeichnet, dass**
eine Steuereinrichtung (32) zur Ansteuerung mindestens eines servomotorischen Antriebs vorgesehen ist.

5. Stiftkontakteinsetzmaschine nach Anspruch 2 und nach Anspruch 4,
**dadurch gekennzeichnet, dass**
die Steuereinrichtung (32) zur Ansteuerung des ersten servomotorischen Antriebs (20), des zweiten servomotorischen Antriebs (16), des dritten servomotorischen Antriebs (18) und des vierten servomotorischen Antriebs (24) gemäß der vorgegebenen Taktung vorgesehen ist, wobei insbesondere keine mechanische Kopplung, sondern eine virtuelle Kopplung zur Steuerung der Bewegungen der Setzeinrichtung (12), der Fördereinheit (4) und der Trenneinrichtung (10) vorgesehen ist.

6. Stiftkontakteinsetzmaschine nach Anspruch 3 und Anspruch 5,
**dadurch gekennzeichnet, dass**
die Steuereinrichtung (32) zur Ansteuerung des fünften servomotorischen Antriebs (24) gemäß der vorgegebenen Taktung eingerichtet ist.

7. Stiftkontakteinsetzmaschine nach einem der Ansprüche 4 bis 6,
**dadurch gekennzeichnet, dass**
die Steuereinrichtung (32) zur Überwachung und Anpassung einer Hubtiefe des Linear-Servomotors eingerichtet ist, wobei die Hubtiefe insbesondere bis zu 100 mm beträgt, bevorzugt bis zu 80 mm beträgt.

8. Stiftkontakteinsetzmaschine nach einem der voranstehenden Ansprüche,
**dadurch gekennzeichnet, dass**
die Setzeinrichtung einen Setzkopf (54) aufweist, wobei der Setzkopf (54) eine einzelne Nut (60) zum Aufnehmen eines von dem Stiftkontaktstreifen (6) abgeteilten Stiftkontakts (8) aufweist oder wobei der Setzkopf (54) mehrere parallele Nuten (60) zum Aufnehmen jeweils eines der von dem Stiftkontaktstreifen (6) abgeteilten Stiftkontakte (8) aufweist, insbesondere bis zu sechs oder genau sechs Nuten (60) zum Aufnehmen jeweils eines der von dem Stiftkontaktstreifen (6) abgeteilten Stiftkontakte (8) aufweist.

9. Verfahren zum Setzen von Stiftkontakten in ein Kunststoffbauteil, wobei eine Stiftkontakteinsetzmaschine nach einem der voranstehenden Ansprüche verwendet wird und wobei die folgenden Verfahrensschritte durchgeführt werden:
- Fördern eines Stiftkontaktstreifens (6) mittels der Fördereinheit (4);
- Abteilen von Stiftkontakten (8) aus dem Stiftkontaktstreifen (6) mittels der Trenneinrichtung (10);
- Setzen der Stiftkontakte (8) in ein Kunststoffbauteil (14) mittels der Setzeinrichtung (12).

10. Verfahren nach Anspruch 9,
**dadurch gekennzeichnet, dass**
von dem Stiftkontaktstreifen (6) abgeteilte Stiftkontakte (8) einzeln und aufeinanderfolgend abgeteilt und in das Kunststoffbauteil (14) eingesetzt werden, wobei für jeden zu setzenden Stiftkontakt (8) ein separater Setzhub mittels der Setzeinrichtung (12) ausgeführt wird, oder
zwei oder mehr von dem Stiftkontaktstreifen (6) abgeteilte, vereinzelte Stiftkontakte (8) gleichzeitig in das Kunststoffbauteil (14) gesetzt werden, wobei für die gleichzeitig zu setzenden Stiftkontakte (8) ein gemeinsamer Setzhub mittels der Setzeinrichtung (12) ausgeführt wird.

11. Verfahren nach Anspruch 9 oder Anspruch 10,
**dadurch gekennzeichnet, dass**
das Kunststoffbauteil (14) im Spritzgussverfahren hergestellt worden ist.

12. Verfahren nach einem der Ansprüche 9 - 11,
**dadurch gekennzeichnet, dass**
das Kunststoffbauteil ein Vorspritzling (64) ist, wobei nach dem Setzen der Stiftkontakte (8) die folgenden Verfahrensschritte durchgeführt werden:
Einsetzen des mit den Stiftkontakten (8) bestückten Vorspritzlings (64) in eine Spritzgussform (66);
Umspritzen des mit den Stiftkontakten (8) bestückten Vorspritzlings (64) mit einem Kunststoff, um ein den mit Stiftkontakten (8) bestückten Vorspritzling (64) aufnehmendes Gehäuse (68) auszubilden.
